# EUROPÄISCHE PATENTANMELDUNG

(11) **EP 3 750 737 A1**
(43) Veröffentlichungstag der Anmeldung: **16.12.2020**
(21) Anmeldenummer: 19180179.4
(22) Anmeldetag: 14.06.2019
(51) Int. Cl.: B60K 11/02, F01P 11/02, F16K 24/00

(54) **BELÜFTUNGSVORRICHTUNG**

(71) Anmelder: Magna Steyr Fuel Systems GmbH, 41516 Grevenbroich (DE)
(72) Erfinder: GROSS, Jörg, 50389 Wesseling (DE); BOLLE, Dirk, 41516 Grevenbroich (DE)
(74) Vertreter: Zangger, Bernd

(57) **Zusammenfassung**

Eine Belüftungsvorrichtung für einen Tank, wobei die Belüftungsvorrichtung einen Eingangsraum (1) umfasst, der mit dem Innenraum des Tanks (2) fluidverbindbar ist, wobei die Belüftungsvorrichtung einen Ausgangsraum (3) umfasst, der einen mit der Umgebung des Tanks (4) fluidverbindbaren Ausgang (5) umfasst, wobei zwischen dem Eingangsraum (1) und dem Ausgangsraum (3) eine gasdurchlässige Membran (6) angeordnet ist, wobei zwischen dem Eingangsraum (1) und dem Ausgangsraum (3), parallel zur Membran (6), ein erstes Belüftungsventil (7) angeordnet ist, wobei das erste Belüftungsventil (7) bei einem ersten vordefinierten Unterdruck im Eingangsraum (1) öffnet und unterhalb des ersten vordefinierten Unterdrucks im Eingangsraum (1) geschlossen ist und ein Tank mit einer solchen Belüftungsvorrichtung.

## Beschreibung

### Gebiet der Erfindung

Die vorliegende Erfindung betrifft eine Belüftungsvorrichtung für einen Tank und einen Tank mit einer solchen Belüftungsvorrichtung.

### Stand der Technik

Es ist bekannt das Tanks, beispielsweise in Kraftfahrzeugen, über eine Belüftungs- und/oder Entlüftungsvorrichtung verfügen können. Als Belüftungsvorrichtung verhindert eine solche Vorrichtung die Entstehung eines zu großen Unterdrucks im Tank, beispielsweise während der Entnahme von Flüssigkeit aus dem Tank, durch Zufuhr von Gas von außerhalb des Tanks, als Entlüftungsvorrichtung verhindert eine solche Vorrichtung die Entstehung eines zu großen Überdrucks im Tank, beispielsweise während einer Betankung, durch Abfuhr von Gas aus dem Tankinneren nach außen. Eine Entlüftung kann sowohl während eines normalen Betriebs des Tanks bzw. eines mit dem Tank ausgestatteten Kraftfahrzeuges über eine sogenannte "Betriebsentlüftung" erfolgen, als auch während einer Betankung des Tanks, über eine von der Betriebsentlüftung verschiedene oder auch mit dieser identischen "Betankungsentlüftung".

Besondere Anforderungen werden an Be- und Entlüftungsvorrichtungen für Wassertanks gestellt. In Kraftfahrzeugen werden Tanks zur Vorhaltung von Wasser insbesondere zur Kühlung von Antriebsmotoren eingesetzt. Das Wasser muss oft in einem sehr reinen Zustand bewahrt werden, um ein sogenanntes "Biofouling" zu verhindern.

Eine Be- und Entlüftungsvorrichtung kann eine Membran zum Gasaustausch zwischen dem Behälterinnenraum und der Umgebung verwenden. Die Verwendung einer Membran kann den Vorteil haben, dass der Gasvolumenstrom vom Tankinnendruck abhängig wird und somit ein zu rascher Luftaustausch bei dynamischen Druckänderungen gebremst wird. Beispielsweise kann bei Entnahme einer Flüssigkeit aus dem Behälterinneren oder bei steigendem Druck im Behälter das Gas nur verzögert nachfließen, bzw. entweichen. Diese Funktion des geringen Gasaustausches kann bei Behältern zur Lagerung von Reinstwasser zur Minimierung von Biokontamination herangezogen werden. Hierdurch kann beispielsweise ein CO2-Zufluss in den Behälterinnenraum reduziert werden. Eine derartige Be-Entlüftung über eine Membran kann, insbesondere in Kombination mit der Vermeidung eines UV-Eintrags durch das Schwärzen der Behälterwand des Tanks, genutzt werden, um das Biofouling im Behälterinneren zu reduzieren bzw. zu unterdrücken.

Allerdings ermöglichen derartige Membranen in einer Be- Entlüftungsvorrichtung, bei vorgegebenem minimal zulässigem Tankinnendruck, nur einen begrenzten maximalen Gasvolumenstrom. Dadurch ist die maximale Entnahmegeschwindigkeit aus dem Behälter begrenzt, um den zulässigen Tankinnendruck nicht zu unterschreiten.

### Zusammenfassung der Erfindung

Es ist eine Aufgabe der Erfindung, Belüftungsvorrichtungen für einen Tank in dieser Hinsicht zu verbessern und insbesondere eine Belüftungsvorrichtung für einen Tank anzugeben, die eine Biokontamination des Tanks reduziert, dabei jedoch hohe Entnahmegeschwindigkeiten aus dem Tank ermöglicht. Auch soll ein Tank mit einer derartigen Belüftungsvorrichtung angegeben werden, die hohe Entnahmegeschwindigkeiten ermöglicht.

Die Lösung der Aufgabe erfolgt durch eine Belüftungsvorrichtung für einen Tank, wobei die Belüftungsvorrichtung einen Eingangsraum umfasst, der mit dem Innenraum des Tanks fluidverbindbar ist, wobei die Belüftungsvorrichtung einen Ausgangsraum umfasst, der einen mit der Umgebung des Tanks fluidverbindbaren Ausgang umfasst, wobei zwischen dem Eingangsraum und dem Ausgangsraum eine gasdurchlässige Membran angeordnet ist, wobei zwischen dem Eingangsraum und dem Ausgangsraum, parallel zur Membran, ein erstes Belüftungsventil angeordnet ist, wobei das erste Belüftungsventil bei einem ersten vordefinierten Unterdruck im Eingangsraum öffnet und unterhalb des ersten vordefinierten Unterdrucks im Eingangsraum geschlossen ist.

Erfindungsgemäß wird eine Membran zur Be- und/oder Entlüftung eines Tanks verwendet, so dass in einem Normalbetrieb des Tanks der Gasaustausch gebremst erfolgt und eine Biokontamination des Tanks reduziert wird. Ein erstes Belüftungsventil ist parallel geschaltet zur Membran in der Belüftungsvorrichtung. Das erste Belüftungsventil ist unterhalb eines ersten vordefinierten Unterdrucks im Eingangsraum geschlossen, so dass eine Belüftung des Tanks ausschließlich über die Membran, auf die erwähnte, gebremst Weise erfolgt. Bei Überschreiten eines ersten vordefinierten Unterdrucks im Eingangsraum der Belüftungsvorrichtung öffnet allerdings das erstes Belüftungsventil.

Durch das zusätzliche parallel zur Membrane geschaltete Ventil, welches zur Beatmung des Behälters genutzt wird, wird die Entnahme mit größerer Geschwindigkeit ermöglicht. Dieses ermöglicht beispielsweise die Verwendung einer Entnahmeeinheit mit einer Pumpenleistung über dem maximalen Gasdurchsatz der Membrane bei minimal zulässigem Tankinnendruck. Eine erfindungsgemäße Belüftungsvorrichtung kann beispielsweise für einen Tank mit einer Entnahmeeinheit mit einer maximalen Förderleistung von über 50 Liter pro Stunde, bevorzugt von über 80 Liter pro Stunde verwendet werden, insbesondere für eine Entnahmeeinheit mit einer maximalen Förderleistung von ca. 100 Liter pro Stunde.

Weiterbildungen der Erfindung sind in den abhängigen Ansprüchen, der Beschreibung sowie den beigefügten Zeichnungen angegeben.

Vorzugsweise ist zwischen dem Eingangsraum und dem Ausgangsraum, in Serie mit der Membran, ein Entlüftungsventil angeordnet, wobei das Entlüftungsventil bei einem vordefinierten Überdruck im Eingangsraum öffnet und unterhalb des vordefinierten Überdrucks im Eingangsraum geschlossen ist.

Das Übertanken des Behälters kann verhindert werden, durch ein solches, in Reihe zur Membran geschaltetes Ventil, mit einem bestimmten Öffnungsdruck, der bevorzugt größer ist, als das Druckniveau im Behälter während der Befüllung, welches über die Einfüllrohrhöhe bzw. durch den von der Füllgeschwindigkeit resultierenden Strömungsdruck erzeugt wird. Dieses Entlüftungsventil dient hauptsächlich zur Entlüftung des Behälters bzw. zur Vermeidung eines nicht akzeptablen positiven Druckniveaus.

Vorzugsweise ist zwischen dem Eingangsraum und dem Ausgangsraum, in Serie mit der Membran, ein zweites Belüftungsventil angeordnet, wobei das zweite Belüftungsventil bei einem zweiten vordefinierten Unterdruck im Eingangsraum öffnet und unterhalb des zweiten vordefinierten Unterdrucks im Eingangsraum geschlossen ist.

Es kann somit beispielsweise das selbe in Reihe geschaltete Ventil oder ein weiteres separates Ventil über eine bei Unterdruck im Behälter öffnende Funktion verfügen, die für kleinere benötigte Volumenströme das Belüften des Behälters durch die Membrane ermöglicht, sodass das parallel zur Membrane geschaltete Ventil geschlossen bleibt und die Filterfunktion bzw. der geringere Gasdurchsatz der Membrane beim Belüften genutzt wird.

Vorzugsweise sind das Entlüftungsventil und das zweite Belüftungsventil parallel zueinander angeordnet. Bevorzugt bildet ein gemeinsames Bauteil den Ventilsitz für das Entlüftungsventil und für das zweite Belüftungsventil.

Der zweite vordefinierte Unterdruck ist bevorzugt kleiner, als der erste vordefinierte Unterdruck, so dass bei einem Unterdruck im Tank zuerst nur das zweite Belüftungsventil geöffnet ist und eine Belüftung somit in weiterer Folge nur über die Membran erfolgt. Erst bei einem stärkeren Unterdruck öffnet auch das erste Belüftungsventil und ermöglicht einen größeren Gasvolumenstrom, der nicht über durch die Membran gelangen muss.

Bevorzugt besteht die gasdurchlässige Membran aus Polytetrafluorethylen (PTFE).

Bevorzugt ist der Eingangsraum der Belüftungsvorrichtung teilweise offen ausgebildet, so dass die Belüftungsvorrichtung auf eine Wand des Tanks aufsetzbar ist, so dass die Wand des Tanks zumindest in einem Belüftungsvorrichtungsabschnitt den Eingangsraum der Belüftungsvorrichtung begrenzt.

In einem erfindungsgemäßen Tank mit einer Belüftungsvorrichtung ist der Eingangsraum der Belüftungsvorrichtung mit dem Innenraum des Tanks fluidverbunden, so dass Gas aus dem Innenraum des Tanks durch die Belüftungsvorrichtung entweichen kann.

Der Eingangsraum der Belüftungsvorrichtung ist bevorzugt teilweise offen ausgebildet, wobei die Belüftungsvorrichtung auf eine Wand des Tanks aufgesetzt ist, so dass die Wand des Tanks zumindest in einem Belüftungsvorrichtungsabschnitt den Eingangsraum der Belüftungsvorrichtung begrenzt. Die Wand des Tanks weist vorzugsweise im Belüftungsvorrichtungsabschnitt eine Öffnung auf, so dass der Eingangsraum der Belüftungsvorrichtung über die Öffnung mit dem Innenraum des Tanks fluidverbunden ist.

Der Tank ist bevorzugt ein Wassertank, insbesondere ein Wassertank zur Kühlung eines Kraftfahrzeugmotors.

Die Belüftungsvorrichtung kann insbesondere in einem Tankverschluss des Tanks angeordnet sein.

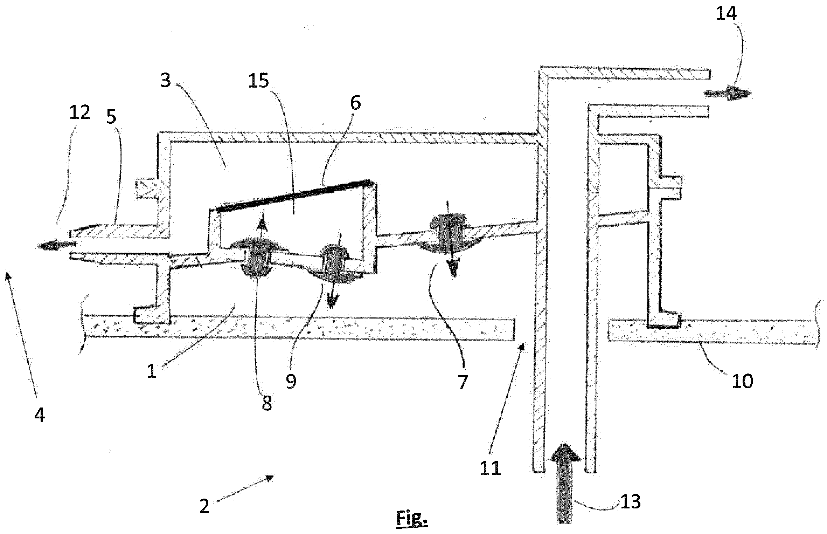

### Kurzbeschreibung der Zeichnung

Die Erfindung wird im Folgenden beispielhaft unter Bezugnahme auf die Zeichnung beschrieben.
- Fig.: ist eine schematische Schnittdarstellung eines Teiles eines Tanks mit einer erfindungsgemäßen Belüftungsvorrichtung.

### Detaillierte Beschreibung der Erfindung

In der Fig. ist ein Tank mit einer erfindungsgemäßen Belüftungsvorrichtung dargestellt.

Die Belüftungsvorrichtung ist auf eine Wand 10 eines Wasser-Tanks in einem Kraftfahrzeug aufgesetzt. Die Wand des Tanks 10 kann insbesondere eine Behälterwand und/oder die Wand einer Kappe des Tanks sein.

Die Belüftungsvorrichtung umfasst einen Eingangsraum 1, der mit dem Innenraum des Tanks 2 fluidverbunden ist. Dazu ist der Eingangsraum 1 der Belüftungsvorrichtung teilweise offen ausgebildet, so dass die Belüftungsvorrichtung auf die Wand des Tanks 10 aufsetzbar ist, so dass die Wand des Tanks 10 in einem Belüftungsvorrichtungsabschnitt den Eingangsraum 1 der Belüftungsvorrichtung begrenzt. Die Wand des Tanks 10 weist im Belüftungsvorrichtungsabschnitt eine Öffnung 11 auf, so dass der Eingangsraum 1 der Belüftungsvorrichtung über die Öffnung 11 mit dem Innenraum des Tanks 2 fluidverbunden ist.

Die Belüftungsvorrichtung umfasst einen Ausgangsraum 3, der einen mit der Umgebung des Tanks 4 fluidverbundenen Ausgang 5 umfasst. Zwischen dem Eingangsraum 1 und dem Ausgangsraum 3 ist eine gasdurchlässige Membran 6 aus Polytetrafluorethylen (PTFE) angeordnet. Die Membran 6 bildet somit eine Trennwand zwischen dem Eingangsraum 1 und dem Ausgangsraum 3.

Die Belüftungsvorrichtung kann einer Betriebsentlüftung des Tanks dienen. Die Ausströmrichtung der Betriebsentlüftung ist durch den Pfeil 12 dargestellt. Die Belüftungsvorrichtung kann auch eine Betankungsentlüftung umfassen. Die Belüftungsvorrichtung kann dazu ein Entlüftungsrohr der Betankungsentlüftung ausbilden. Die Einströmrichtung des Fluids der Betankungsentlüftung ist durch den Pfeil 13 dargestellt, die Ausströmrichtung der Betankungsentlüftung durch den Pfeil 14.

Zwischen dem Eingangsraum 1 und dem Ausgangsraum 3 ist, parallel zur Membran 6, auch ein erstes Belüftungsventil 7 angeordnet. Das erste Belüftungsventil 7 öffnet bei einem ersten vordefinierten Unterdruck im Eingangsraum 1 und ist unterhalb des ersten vordefinierten Unterdrucks im Eingangsraum 1 geschlossen.

Zwischen dem Eingangsraum 1 und dem Ausgangsraum 3 ist, in Serie mit der Membran 6, ein Entlüftungsventil 8 angeordnet, wobei das Entlüftungsventil 8 bei einem vordefinierten Überdruck im Eingangsraum 1 öffnet und unterhalb des vordefinierten Überdrucks im Eingangsraum 1 geschlossen ist. Die Anordnung in Serie mit der Membran erfolgt so, dass das Entlüftungsventil 8 vom Eingangsraum 1 her gesehen einen Eingang zu einem Durchgangsraum 15 bildet und die Membran 6 einen Ausgang aus diesem Durchgangsraum 15 bildet. Der Durchgangsraum 15 liegt somit zwischen dem Eingangsraum 1 und dem Ausgangsraum 3. Der Durchgangsraum 15 ist von Wänden der Belüftungsvorrichtung begrenzt.

Zwischen dem Eingangsraum 1 und dem Ausgangsraum 3 ist, in Serie mit der Membran 6, auch ein zweites Belüftungsventil 9 angeordnet, wobei das zweite Belüftungsventil 9 bei einem zweiten vordefinierten Unterdruck im Eingangsraum 1 öffnet und unterhalb des zweiten vordefinierten Unterdrucks im Eingangsraum 1 geschlossen ist. Das zweite Belüftungsventil 9 bildet ebenfalls, vom Eingangsraum 1 her gesehen, einen Eingang zu dem Durchgangsraum 15. Der Durchgangsraum 15 ist somit durch Wände der Belüftungsvorrichtung und zum Eingangsraum 1 hin durch das Entlüftungsventil 8 und das zweite Belüftungsventil 9 begrenzt und zum Ausgangsraum 3 hin durch die Membran 6 begrenzt. Dem Durchgangsraum 15 funktional parallel liegt das erste Belüftungsventil 7. Die Wände der Belüftungsvorrichtung können die Ventilsitze für das erste Belüftungsventil 7 und/oder für das zweite Belüftungsventil 9 und/oder für das Entlüftungsventil 8 bilden.

Durch ein zusätzliches, parallel zu einer PTFE-Membrane 6 geschaltetes Ventil 7, welches ausschließlich zur Beatmung des Behälters genutzt wird, wird somit die Entnahme des Tankinhalts mit größerer Geschwindigkeit ermöglicht. Dieses ist vor allem dann nützlich, wenn beispielsweise die Pumpenleistung der Entnahmeeinheit über dem maximalen Gasdurchsatz der PTFE-Membrane 6 bei minimal zulässigem Tankinnendruck liegt.

Des Weiteren wird das Übertanken des Behälters verhindert durch ein in Reihe zur PTFE-Membrane 6 geschaltetes Ventil 8 mit einem bestimmten Öffnungsdruck, der größer ist, als das Druckniveau im Behälter während der Befüllung, welches über die Einfüllrohrhöhe bzw. durch den von der Füllgeschwindigkeit resultierenden Strömungsdruck erzeugt wird. Dieses Ventil 8 dient hauptsächlich zur Entlüftung des Behälters bzw. zur Vermeidung eines nicht akzeptablen positiven Druckniveaus.

Optional kann das in Reihe geschaltete Ventil 8 über eine bei Unterdruck im Behälter öffnende Funktion verfügen und somit auch das zweite Belüftungsventil 9 bilden, und für kleinere benötigte Volumenströme das Belüften des Behälters durch die PTFE-Membrane 6 ermöglichen, sodass bei geringeren Unterdrücken das parallel zur Membrane 6 geschaltete Ventil 7 geschlossen bleibt und die Filterfunktion der PTFE-Membrane 6 beim Belüften genutzt werden kann.

### Bezugszeichenliste

- 1: Eingangsraum
- 2: Innenraum des Tanks
- 3: Ausgangsraum
- 4: Umgebung des Tanks
- 5: Ausgang
- 6: Membran
- 7: erstes Belüftungsventil
- 8: Entlüftungsventil
- 9: zweites Belüftungsventil
- 10: Wand des Tanks
- 11: Öffnung
- 12: Ausströmrichtung Betriebsentlüftung
- 13: Einströmrichtung Betankungsentlüftung
- 14: Ausströmrichtung Betankungsentlüftung
- 15: Durchgangsraum

## Patentansprüche

1. Belüftungsvorrichtung für einen Tank, wobei die Belüftungsvorrichtung einen Eingangsraum (1) umfasst, der mit dem Innenraum des Tanks (2) fluidverbindbar ist, wobei die Belüftungsvorrichtung einen Ausgangsraum (3) umfasst, der einen mit der Umgebung des Tanks (4) fluidverbindbaren Ausgang (5) umfasst, wobei zwischen dem Eingangsraum (1) und dem Ausgangsraum (3) eine gasdurchlässige Membran (6) angeordnet ist,
**dadurch gekennzeichnet, dass** zwischen dem Eingangsraum (1) und dem Ausgangsraum (3), parallel zur Membran (6), ein erstes Belüftungsventil (7) angeordnet ist, wobei das erste Belüftungsventil (7) bei einem ersten vordefinierten Unterdruck im Eingangsraum (1) öffnet und unterhalb des ersten vordefinierten Unterdrucks im Eingangsraum (1) geschlossen ist.

2. Belüftungsvorrichtung nach Anspruch 1,
**dadurch gekennzeichnet, dass** zwischen dem Eingangsraum (1) und dem Ausgangsraum (3), in Serie mit der Membran (6), ein Entlüftungsventil (8) angeordnet ist, wobei das Entlüftungsventil (8) bei einem vordefinierten Überdruck im Eingangsraum (1) öffnet und unterhalb des vordefinierten Überdrucks im Eingangsraum (1) geschlossen ist.

3. Belüftungsvorrichtung nach zumindest einem der vorhergehenden Ansprüche,
**dadurch gekennzeichnet, dass** zwischen dem Eingangsraum (1) und dem Ausgangsraum (3), in Serie mit der Membran (6), ein zweites Belüftungsventil (9) angeordnet ist, wobei das zweite Belüftungsventil (9) bei einem zweiten vordefinierten Unterdruck im Eingangsraum (1) öffnet und unterhalb des zweiten vordefinierten Unterdrucks im Eingangsraum (1) geschlossen ist.

4. Belüftungsvorrichtung nach Anspruch 2 und 3,
**dadurch gekennzeichnet, dass** das Entlüftungsventil (8) und das zweite Belüftungsventil (9) parallel zueinander angeordnet sind, wobei bevorzugt ein gemeinsames Bauteil den Ventilsitz für das Entlüftungsventil (8) und für das zweite Belüftungsventil (9) bildet.

5. Belüftungsvorrichtung nach Anspruch 3 oder 4,
**dadurch gekennzeichnet, dass** der zweite vordefinierte Unterdruck kleiner ist, als der erste vordefinierte Unterdruck.

6. Belüftungsvorrichtung nach zumindest einem der vorhergehenden Ansprüche,
**dadurch gekennzeichnet, dass** die gasdurchlässige Membran (6) aus Polytetrafluorethylen besteht.

7. Belüftungsvorrichtung nach zumindest einem der vorhergehenden Ansprüche,
**dadurch gekennzeichnet, dass** der Eingangsraum (1) der Belüftungsvorrichtung teilweise offen ausgebildet ist, so dass die Belüftungsvorrichtung auf eine Wand des Tanks (10) aufsetzbar ist, so dass die Wand des Tanks (10) zumindest in einem Belüftungsvorrichtungsabschnitt den Eingangsraum (1) der Belüftungsvorrichtung begrenzt.

8. Tank mit einer Belüftungsvorrichtung nach zumindest einem der vorhergehenden Ansprüche,
**dadur chgekennzeichnet**, dass der Eingangsraum (1) der Belüftungsvorrichtung mit dem Innenraum (2) des Tanks fluidverbunden ist.

9. Tank mit einer Belüftungsvorrichtung nach Anspruch 8,
**dadurch gekennzeichnet, dass** der Eingangsraum (1) der Belüftungsvorrichtung teilweise offen ausgebildet ist, wobei die Belüftungsvorrichtung auf eine Wand des Tanks (10) aufgesetzt ist, so dass die Wand des Tanks (10) zumindest in einem Belüftungsvorrichtungsabschnitt den Eingangsraum (1) der Belüftungsvorrichtung begrenzt, wobei die Wand des Tanks (10) im Belüftungsvorrichtungsabschnitt eine Öffnung (11) aufweist, so dass der Eingangsraum (1) der Belüftungsvorrichtung über die Öffnung (11) mit dem Innenraum des Tanks (2) fluidverbunden ist.

10. Tank mit einer Belüftungsvorrichtung nach Anspruch 8 oder 9,
**dadurch gekennzeichnet , dass** der Tank ein Wassertank ist, insbesondere ein Wassertank zur Kühlung eines Kraftfahrzeugmotors.
